(19) Europäisches Patentamt

European Patent Office

Office européen des brevets

(11) **EP 1 596 185 B1**

(12) **EUROPEAN PATENT SPECIFICATION**

(45) Date of publication and mention
of the grant of the patent:
**27.12.2006 Bulletin 2006/52**

(51) Int Cl.:
*G01N 21/53* (2006.01)      *G01N 21/15* (2006.01)

(21) Application number: **04425329.2**

(22) Date of filing: **10.05.2004**

(54) **Visibility measuring system and method**

Vorrichtung und Verfahren zur Messung der Sichtweite

Système et méthode pour mesurer la visibilité

(84) Designated Contracting States:
**AT BE BG CH CY CZ DE DK EE ES FI FR GB GR HU IE IT LI LU MC NL PL PT RO SE SI SK TR**

(43) Date of publication of application:
**16.11.2005 Bulletin 2005/46**

(73) Proprietor: **C.R.F. Società Consortile per Azioni**
**10043 Orbassano (TO) (IT)**

(72) Inventors:
• **Vivo, Giulio, c/o C.R.F. Società Consortile per**
**10043 Orbassano (IT)**
• **Carrea, Paola**
**c/o C.R.F. Società Consortile per**
**10043 Orbassano (IT)**

(74) Representative: **Jorio, Paolo et al**
**STUDIO TORTA S.r.l.**
**Via Viotti, 9**
**10121 Torino (IT)**

(56) References cited:
**DE-B- 1 128 301         DE-B- 1 204 848**
**FR-A- 2 745 915         US-A- 4 794 266**
**US-A1- 2003 197 867**

• **PATENT ABSTRACTS OF JAPAN vol. 0112, no. 64 (P-610), 27 August 1987 (1987-08-27) & JP 62 069147 A (NICHIBEI DENSHI KK), 30 March 1987 (1987-03-30)**
• **PATENT ABSTRACTS OF JAPAN vol. 2002, no. 05, 3 May 2002 (2002-05-03) & JP 2002 014038 A (KOITO IND LTD), 18 January 2002 (2002-01-18)**
• **PATENT ABSTRACTS OF JAPAN vol. 1995, no. 02, 31 March 1995 (1995-03-31) & JP 6 308256 A (HITACHI CABLE LTD), 4 November 1994 (1994-11-04)**
• **PATENT ABSTRACTS OF JAPAN vol. 1999, no. 08, 30 June 1999 (1999-06-30) & JP 11 064221 A (SUMITOMO ELECTRIC IND LTD), 5 March 1999 (1999-03-05)**

EP 1 596 185 B1

**Description**

The present invention relates to a visibility measuring system and method.

More specifically, the present invention relates to a system and method of measuring visibility along a road, such as a street and/or main road, a motorway, or any road in general along which vehicles travel; to which application the following description refers purely by way of example.

As is known, poor visibility along roads, particularly motorways, caused by fog, rain or other weather conditions, is today one of the major causes of road accidents. It is therefore imperative to be able to determine and accurately measure road visibility, so as to alert road vehicle users in advance when visibility falls below a given safety threshold.

Visibility measuring systems used for other than road applications, e.g. aeronautical or meteorological, are known, and which are substantially based on the principle of emitting a light beam into the measuring area, and processing the received light beam to determine various parameters characterizing the visibility of the area traversed by the beam. Currently used aeronautical or meteorological measuring systems employ measuring equipment such as transmissometers, reflectometers, or scattering sensors.

Transmissometers comprise a projector for emitting a light beam in a predetermined direction; and a photoreceiver located a given distance from the projector and oriented towards the projector to receive and process the light beam, and supply information concerning the visibility within the space traversed by the light beam.

Such information is obtained by comparing the intensity of the light beam acquired during the measurement with that of a reference beam acquired under normal visibility conditions, e.g. in a perfectly clear, transparent atmosphere.

To improve the signal/noise ratio and reduce the error caused by the light component dispersed by atmospheric particles external to those traversed directly by the beam, the projector and photoreceiver of transmissometers of the above type must be perfectly aligned and oriented with respect to each other, which calls for the use of extremely rigid, heavy supporting structures designed to prevent the slightest movement of the projector and/or photoreceiver from their respective initial beam calibration and orientation positions.

Moreover, since measurements made using transmissometers of the above type are highly sensitive to fluctuations in light intensity in the projector when emitting the beam, currently used transmissometers must be equipped with complex electronic circuits for controlling the projector and maintaining a stable intensity of the beam.

Reflectometers differ from the transmissometers described above by the projector and photoreceiver being located side by side, so that the photoreceiver picks up the light intensity reflected by the particles traversed by the light beam from the projector. The major drawback of reflectometers of this type is their highly limited range, i.e. measuring range, which prevents them from being used for visibility measurements over large areas.

Scattering (forward scattering and backward scattering) sensors comprise a light emitter for generating the light beam; and a photoreceiver, which is typically located opposite the emitter, not aligned with the path of the beam, or is located close to the emitter to measure the light diffused by the particles traversed by the beam. Like reflectometers, scattering sensors are also of limited range, which is limited to the area in which the sensor is installed, and so prevents them being used for visibility measurements in large areas such as roads.

Another visibility measuring system is described in French Patent Application FR2745915, which describes and illustrates a device comprising: a light source; a videocamera separated from the light source by a space in which visibility is measured; and a processing module connected to and receiving from the videocamera a signal coding the acquired image. The signal coding the image generated by the videocamera is digitized and processed by the processing module, which provides for measuring the variation in light intensity of the image, determining whether the variation in light intensity satisfies a given poor visibility condition, and, if so, transmitting the acquired image and an alarm signal to a remote video monitoring unit.

Patent abstract of JP-62069147 discloses a measuring method for visibility in which a solid state camera is connected to a control device, and a view body having a light emitting part, an approximate black body part and an illumination meter. Light from a light source is sent in parallel rays by a lens to the camera, and an image which is caught by the camera is sent to device. In such a state, the luminous radiation of the light emitting part is set to zero and brightness per unit of area of the approximate black body part and the background light is measured. Next, the luminous radiation is executed from the light emitting part, brightness per unit area of the light emitting part is measured, and also brightness per unit area of an external light is derived by the illumination meter. These values are sent to the device and the visibility of each object is calculated by using a prescribed expression.

Patent abstract of JP-2002014038 discloses a measuring apparatus for visibility status comprising a television camera which images an index, which is set at a position separated by a prescribed distance by sandwiching air. The index comprises two regions, whose chromaticities are different. On the basis of image signal from the television camera, a processor finds the degree of visibility on the basis of the ratio of the degree found to the degree of the distance between the chromaticities of the two region at the index, in a state which is substantially not influenced by turbidity of the air.

Patent abstract of JP-06308256 discloses a cloudy fog detection method in which the monitor image around a steel tower is monitor area, for example, photographed by an ITV camera is processed by an imaging processing circuit, the luminance histogram is measured, and the luminance distribution is calculated. The luminance at each point of the monitor image is divided into 256 gradations, the luminance is indicated on the horizontal axis, the number of picture elements is indicated on vertical axis in the luminance histogram, the dispersion of the luminance histogram is obtained in the range 25-28, and the peak exist in this range. The steel tower and the background are invisible except for a needle-like image near the camera in the monitor image when the fog occurs, the luminance dispersion is set in the range of the valley of 20-25 formed between two peaks, the occurrence of cloudy fog can be detected when the obtained luminance dispersion is compared with it, the effect of cloudy fog on penetration detecting device is removed or reduced, and the monitor precision is improved.

It is an object of the present invention to provide a system designed to gather better, more accurate visibility measuring information.

According to the present invention, a visibility measuring method, and a visibility measuring system are provided, as defined in the appended claims.

A non-limiting embodiment of the present invention will be described by way of example with reference to the accompanying drawings, in which:

Figure 1, shows, schematically, the visibility measuring system according to the teachings of the present invention;
Figure 2 shows a flow chart of the visibility measuring operations performed by the system;
Figure 3 shows a flow chart of the acquired image processing operations performed by the system;
Figures 4, 5 and 6 show three histograms relative to three images acquired by an image acquisition apparatus forming part of the Figure 1 system.

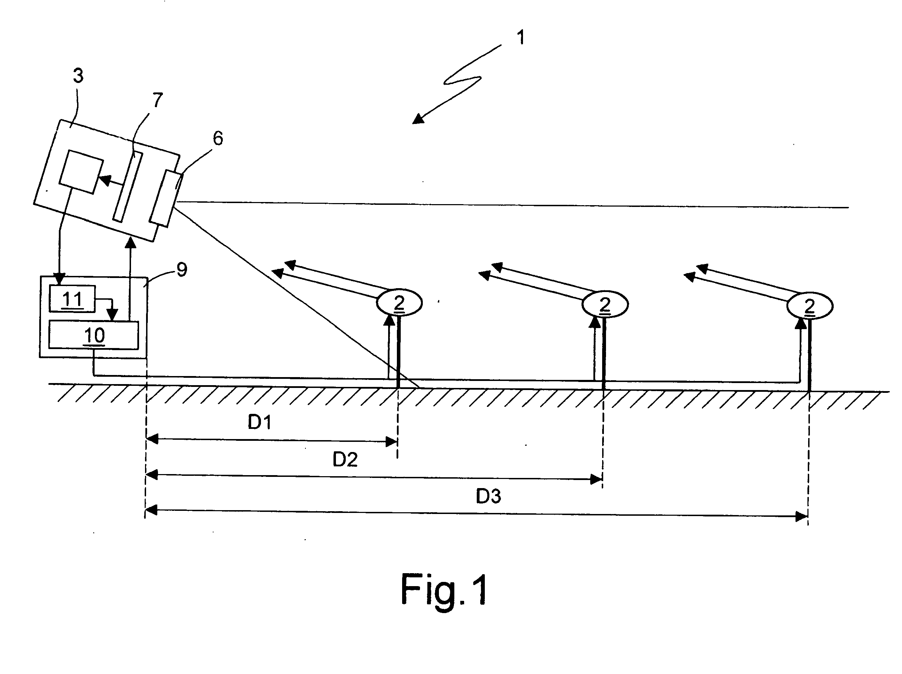

Number 1 in Figure 1 indicates as a whole a measuring system for measuring visibility in any area or region or along any road, to which the following description refers purely by way of example.

Measuring system 1 substantially comprises a number of radiating sources, i.e. a series of emitting devices 2, which are located one after the other, respective distances apart, along the road whose visibility is to be measured, and which are turned on, on command, to emit respective radiating beams in a given direction; and an image acquisition apparatus 3 located a given distance from emitting devices 2 to frame, and so supply an image containing, emitting devices 2.

In the Figure 1 example, each radiating source, i.e. each emitting device 2, is located along the road at a respective distance $D_i$ (i ranging between 1 and n) from image acquisition apparatus 3, and is defined, for example, by a photoemitter for generating the radiating beam, on command, in a predetermined direction preferably oriented towards image acquisition apparatus 3.

In the example shown, the radiating beam from each emitting device 2 is defined by a light beam having a frequency spectrum preferably, though not necessarily, in the infrared region (wavelength of 800 nm or over).

As will be clear from the above description, the radiating beam may obviously have a light frequency spectrum in the visible region (400 to 760 nm) or ultraviolet region (approximately 300 nm).

Image acquisition apparatus 3 may be defined by a still camera or videocamera or television camera, or any similar apparatus capable of picking up and acquiring one or more images in the same frequency spectrum as the light emitted by the radiating source, and of supplying it in the form of a coded digital signal. In the Figure 1 example, image acquisition apparatus 3 is defined by a television camera - hereinafter indicated by number 3 - oriented to frame emitting devices 2 along the road whose visibility is to be measured. In the Figure 1 example, television camera 3 picks up and acquires images with a frequency spectrum preferably in the infrared region, but may obviously pick up and acquire images with a frequency spectrum in the ultraviolet and/or visible region.

More specifically, television camera 3 substantially comprises an optical assembly 6 sized and designed to preferably cover emitting devices 2 aligned along the road; a preferably, though not necessarily, monochromatic photosensitive sensor 7, e.g. a CCD or CMOS sensor, for receiving the "infrared" image acquired and projected by optical assembly 6, and supplying it in signal form; and a processing circuit 8 for receiving and appropriately processing the signal from photosensitive sensor 7, and in turn supplying the image of emitting devices 2 in digital form.

With reference to Figure 1, measuring system 1 also comprises a central processing unit 9 for controlling and appropriately coordinating turn on/turn off of emitting devices 2 and image acquisition by television camera 3, and for appropriately processing the acquired images, as described in detail later on, to supply information concerning the visibility measured along the road.

More specifically, central processing unit 9 substantially comprises a control block 10 connected to each emitting device 2 to control turn on/turn off of emitting device 2, and to television camera 3 to control acquisition of the image showing emitting devices 2.

Central processing unit 9 also comprises a processing block 11 for performing various processing operations on the digital image from television camera 3, and for supplying information concerning the visibility along the road.

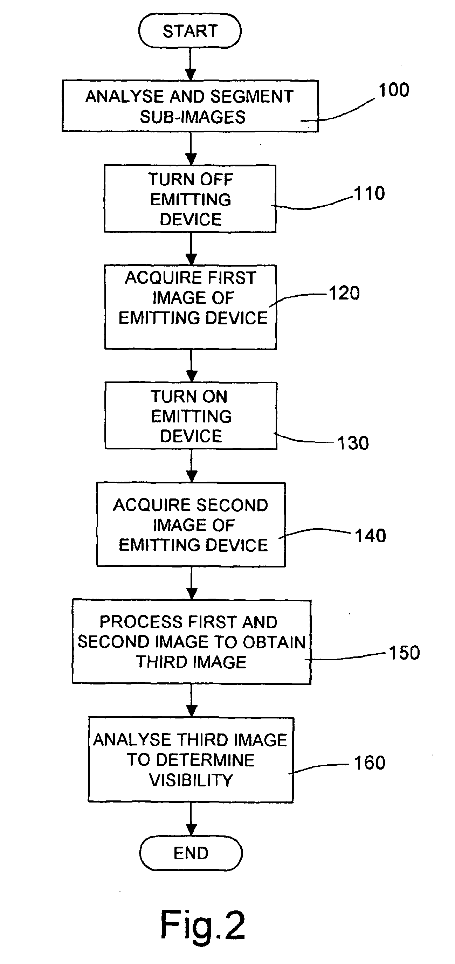

Figure 2 shows a flow chart of the visibility measuring operations performed by system 1.

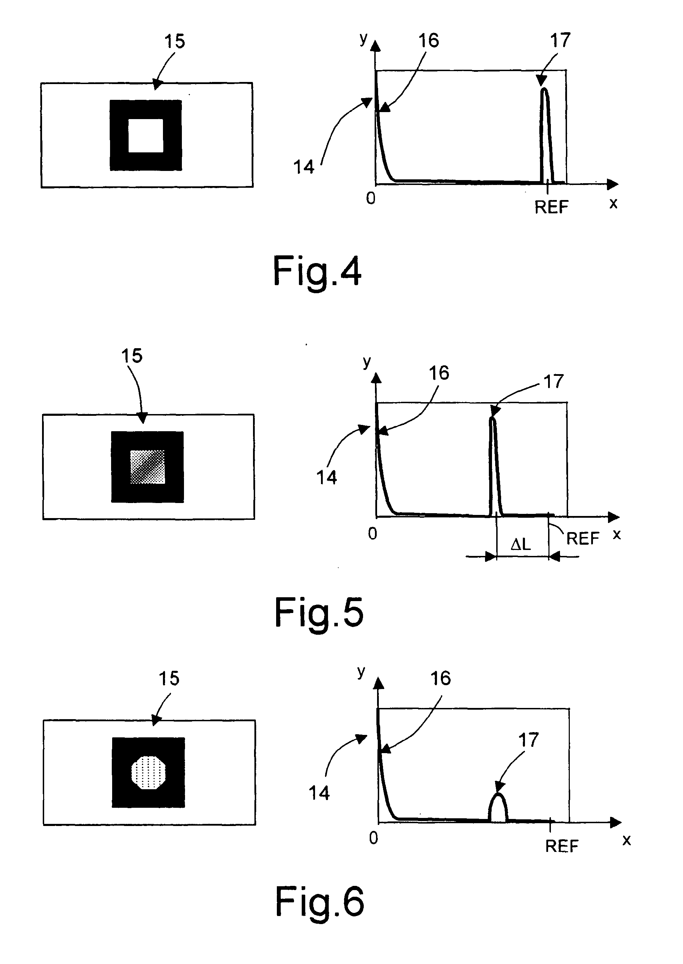

Firstly, system 1 performs a number of analysis and segmentation operations to determine, within the image acquired by television camera 3, the sub-images associated with emitting devices 2. That is, with reference to Figures 4, 5 and 6, each sub-image comprises an inner portion showing the image of emitting device 2, and an outer frame showing the image around emitting device 2. By means of the analysis and segmentation operation, measuring system 1 is able to determine each sub-image, and to advantageously limit processing of the main image to the pixels in the acquired image containing information pertinent to the visibility measurement.

Following analysis and segmentation of the sub-images, control block 10 turns each emitting device 2 off (block 110) and activates television camera 3, which acquires a first image showing emitting devices 2 off (block 120) and supplies the first image to processing block 11 by which it is memorized temporarily.

Once the first image is acquired, control block 10 turns each emitting device 2 on (block 130) and activates television camera 3 to acquire a second image showing emitting devices 2 on, and which is supplied to and memorized temporarily by processing block 11 (block 140). At this step, control block 10 may turn all the emitting devices 2 on simultaneously to acquire an image showing all the emitting devices 2 on.

It should be pointed out that each image is coded by processing block 11 into a respective matrix of pixels, each of which is characterized by a discrete numeric value indicating a given intensity "level" of the radiating beam in the area corresponding to the pixel in the image acquired by television camera 3. For example, the image may be coded according to an intensity level scale in which the discrete value of each pixel in the matrix may range between a maximum numeric value and a minimum numeric value.

For the sake of simplicity, the following description employs the terminology normally used in the processing of images acquired by conventional television cameras (operating in the visible range), and in which the image is coded according to a grey-level scale. More specifically, the discrete value of each pixel in the matrix may range between a maximum numeric value (e.g. 256) and a minimum numeric value (typically 0) corresponding to "white" and "black" brightness levels respectively. The technique of coding an image in matrix number form is known and therefore not described in further detail.

At this point, processing block 11 processes the first and second image to obtain information about the visibility in the measuring volume between each emitting device 2 and television camera 3 (block 150). More specifically, processing block 11 calculates a third image by calculating the difference between the numeric value of each pixel in the first matrix of the first image, and the numeric value of the relative pixel in the second matrix of the second image, and by assigning the resulting number, i.e. the discrete value of the resulting intensity level, to a corresponding pixel in a third matrix relative to the third image. The third matrix thus codes an image formed by the "difference" between the first and second image acquired by television camera 3.

Once the third image is calculated, processing block 11 analyses the third matrix (block 160) to obtain information about the "visual perception" of each emitting device 2 in the third image, and accordingly measure the visibility along the road or in the area in which emitting devices 2 are installed. More specifically, by means of the above analysis, processing block 11 supplies information relative to radiating beam energy absorption caused by particles (e.g. vapour particles or other dulling elements) suspended in the measuring volume between each emitting device 2 and television camera 3, and to forward scattering of the radiating beam caused by the same particles or other refracting elements.

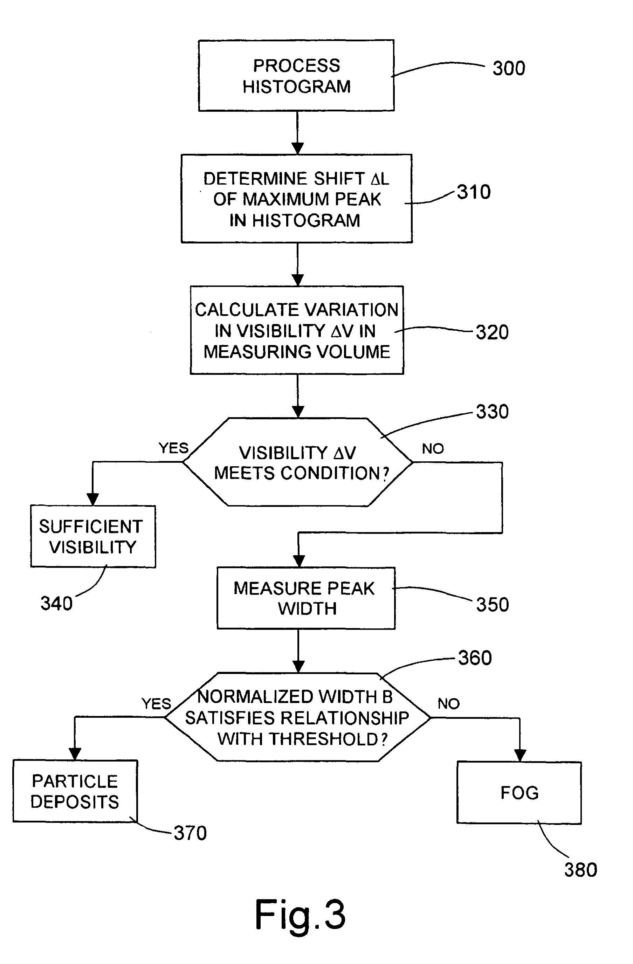

More specifically, the image analysis operations performed by processing block 11 on the third image are shown in the Figure 3 flow chart, and are substantially based on analysing a histogram of the intensity levels of the pixels defining each sub-image to determine the variation in the visibility of the sub-image within the measuring volume between television camera 3 and the emitting device 2, and so determine the visibility condition. In the event of poor visibility, a value related to forward scattering of the radiating beam is determined to establish the cause of the variation in visibility.

With reference to Figure 3, when analysing the third image (block 160 in Figure 2), processing block 11 determines a histogram 14 of the pixels as a whole forming each sub-image 15 (block 300 in Figure 3).

Figures 4, 5 and 6 show three examples of histograms 14 obtained by processing three sub-images 15, and in which each value on the Y axis corresponds to the number of pixels in the relative sub-image 15 having the same numerical value, i.e. the same grey level, and the X axis shows the grey levels. More specifically, in the examples shown, each histogram 14 comprises two peaks : a first peak 16 (at the dark grey levels around the 0 level) relative to the pixels in the outer frame of the sub-image (the dark pixels in each "difference" image, i.e. the grey levels close to 0, correspond to the sub-image areas whose brightness is unchanged between the first and second image); and a second peak 17 (close to the lighter grey levels) relative to the pixels in the central portion showing the emitting device 2. In the example shown, the high grey levels are caused by a sharp variation in brightness (turn-on of emitting device 2) between the first and second image.

Once the sub-image histogram is determined, processing block 11 determines the shift $\Delta L$ of the second peak 17 in histogram 14 with respect to a reference position indicated REF in Figure 4 and indicating the position of the second peak 17 in a reference histogram relative to a perfect visibility condition. The reference position REF in the histogram may obviously be determined when calibrating the system with optimum visibility in the measuring volume. Figure 4 shows an example histogram 14 relative to a sub-image 15 in an optimum visibility condition.

Once the shift $\Delta L$ of second peak 17 with respect to the reference point REF is determined, processing block 11 calculates the variation in visibility $\Delta V$ in the measuring volume between television camera 3 and the emitting device 2 corresponding to the processed sub-image (block 320). In the example shown, the variation in visibility $\Delta V$ is determined according to the equation:

$$\Delta V = \alpha * \Delta L$$

where $\alpha$ is the transformation function between the histogram grey level domain and the visibility domain.

At this point, processing block 11 determines whether the variation in visibility $\Delta V$ satisfies a given relationship with a predetermined visibility threshold $\Delta VR$ (block 330). The predetermined visibility threshold $\Delta VR$ may, for example, be a limit visibility condition, and the relationship may be satisfied when $\Delta V$ is below and/or equal to the predetermined threshold $\Delta VR$.

In the event of a positive response (YES output of block 330), i.e. if the relationship between the variation in visibility and the predetermined visibility threshold is satisfied, processing block 11 indicates a sufficient or acceptable visibility condition (block 340) in the measuring volume between television camera 3 and the analysed emitting device 2 (condition shown in Figure 4). Conversely, in the event of a negative response (NO output of block 330), processing block 11 determines a poor visibility condition, and performs a series of operations to discriminate between a condition in which poor visibility is caused by the presence of refracting elements, such as fog and/or vapour, in the measuring volume, from a condition in which poor visibility is caused by dulling elements present in the work volume or deposited by the atmosphere on the optical assembly 6 of television camera 3 or on the optical elements (not shown) of emitting devices 2. Figures 5 and 6 show two histograms and respective sub-images, each relative to a poor visibility condition.

Said discrimination is made as a function of the width of second peak 17 in the histogram.

More specifically, at this step (block 350), processing block 11 performs the following operations:

measures the width L of the second peak; and normalizes width L with respect to the dimension of the analysis area of the sub-image by means of the following equation:

$$B = L(\mu + 3\sigma) - L(\mu - 3\sigma)$$

where B is the normalized width, $\mu$ and $\sigma$ are the mean and standard deviation respectively, of the second peak in the histogram, and $L(x)$ is the grey level determined at position x in the histogram. It should be pointed out that the normalized width B is related to the amount of forward refraction of the radiating beam.

Following the above calculation, processing block 11 determines whether the normalized width B satisfies a given relationship with a predetermined value K related to a predetermined refraction threshold (block 360). The relationship may be satisfied, for example, when the normalized width B is greater than or equal to predetermined value K.

In the event of a positive response (YES output of block 360), i.e. if the normalized width B is greater than or equal to predetermined value K (example shown in Figure 6), processing block 11 indicates poor visibility in the measuring volume caused by the presence of dulling elements in the work volume, or by dulling elements deposited or accumulated on optical assembly 6 of television camera 3 or on the optical elements (not shown) of emitting devices 2.

Conversely, in the event of a negative response (NO output of block 360), i.e. if the normalized width B is below predetermined value K (example shown in Figure 5), processing block 11 indicates poor visibility in the measuring volume caused by the presence of refracting elements, such as vapour, fog, etc., in the work volume.

In addition to being extremely straightforward to produce, by employing commonly used devices and equipment, system 1 as described above also has the advantage of accurately determining the visibility condition along the road section between each emitting device 2 and television camera 3.

Another major advantage of system 1 is that of discriminating between the two conditions resulting in poor visibility, i.e. the condition in which poor visibility is caused by the presence of dulling elements, such as fumes or particulate, in the measuring volume, or by dulling elements accumulating on the optical components of the television camera or emitting devices, and the condition in which poor visibility is caused by the presence of refracting elements, such as fog or vapour, in the measuring volume.

Another advantage of system 1 is that of permitting visibility measurements within a large work volume covering extensive areas, such as long road sections.

Clearly, changes may be made to system 1 as described and illustrated herein without, however, departing from the scope of the present invention.

In particular, in a variation not shown, block 130 turns emitting devices 2 on successively, as opposed to simultaneously, and the corresponding second image is acquired (block 140) as each is turned on. The follow-up operations, to determine the third image as a function of each first and second image, and to process each third image, are obviously the same as described above.

**Claims**

1. A visibility measuring method comprising:

   providing at least one radiating source (2) configured to emit a radiating beam;
   providing an image acquisition apparatus (3) at a given distance (Di) from said radiating source (2) and oriented to acquire, on command, an image containing said radiating source (2) ;
   turning off (110) said radiating source (2) and acquiring (120) a first image of said radiating source (2) off;
   turning on (130) said radiating source (2) and acquiring (140) a second image of said radiating source (2) on; and
   processing (150) said first and second images to determine the visibility in the measuring volume between said radiating source (2) and said image acquisition apparatus (3);
   said method being **characterized in that** processing said first and second images comprises:

   determining (150) a third image as a difference between said first and second images;
   determining (300) a histogram (14) of the pixels in said third image;
   determining a shift ($\Delta$L) of a peek (17) in said histogram with respect to a reference position (REF); and
   determining a variation in visibility ($\Delta$V) in said measuring volume as a function of said shift ($\Delta$L).

2. The method of claim 1, wherein said variation in visibility ($\Delta$V) is determined according to the following equation:

$$\Delta V = \alpha * \Delta L$$

   where a is a transformation function between a brightness level domain of said histogram and a visibility domain.

3. The method of claim 1 or 2, further comprising:

   determining (330) whether said variation in visibility ($\Delta$V) satisfies a given relationship with a predetermined variation threshold; and
   determining (340, 350, 360, 370, 380) a correct visibility condition in said measuring volume when said relationship is satisfied, and a poor visibility condition in said measuring volume when said relationship is not satisfied.

4. The method of claim 3, further comprising:

   measuring (350) a width of said peak (17); and
   determining a visibility state causing said poor visibility condition as a function of said peak width.

5. The method of claim 4, wherein measuring said peak width comprises:

   determining a first value related to said width according to the following equation:

$$B = L(\mu + 3\sigma) - L(\mu - 3\sigma)$$

   where B is a normalized width, $\mu$ and $\sigma$ are mean and standard deviation, respectively, of the peak in the histogram, and L(x) is an intensity level determined at a position x in the histogram.

6. The method of claim 5, wherein determining said visibility state comprises:

determining whether said first value related to said width satisfies a given relationship with a predetermined reference threshold.

7. The method of any preceding claim, wherein providing at least one radiating source comprises:

   providing a number of radiating sources (2) at different distances from said image acquisition apparatus (3).

8. The method of claim 7, further comprising:

   turning off (110) each radiating source (2) and acquiring (120) a first image of each radiating source (2) off; and turning on (130) each radiating source (2) and acquiring (140) a second image of each radiating source (2) on.

9. The method of claim 8, wherein turning off each radiating source comprises:

   turning off (110) all radiating sources (2) simultaneously; and

   wherein turning on each radiating source comprises:

   turning on (130) all radiating sources (2) simultaneously.

10. A visibility measuring system (1) comprising:

    at least one radiating source (2) configured to emit a radiating beam;
    an image acquisition apparatus (3) provided at a given distance (Di) from said radiating source (2) and oriented to acquire, on command, an image containing said radiating source (2);
    control means (10) configured to control said radiating source (2) and said image acquisition apparatus (3) to turn off said radiating source (2) and to acquire a first image of said radiating source (2) off, and to turn on said radiating source (2) and to acquire a second image of said radiating source (2) on; and
    processing means (11) configured to process said first and second images to determine the visibility in the measuring volume between said radiating source (2) and said image acquisition apparatus (3);
    said visibility measuring system (1) being **characterized in that** said processing means (11) are configured to:

    determine (150) a third image as a difference between said first and second images;
    determine (300) a histogram (14) of pixels in said third image; and
    determine a shift ($\Delta L$) of a peak (17) in said histogram with respect to a reference position (REF); and
    determine a variation in visibility ($\Delta V$) in said measuring volume as a function of said shift ($\Delta L$).

11. The system of claim 10, wherein said variation in visibility ($\Delta V$) is determined according to the following equation:

$$\Delta V = \alpha * \Delta L$$

where $\alpha$ is a transformation function between a brightness level domain of said histogram and a visibility domain.

12. The system of claim 10 or 11, wherein said processing means (11) are further configured to:

    determine (330) whether said variation in visibility ($\Delta V$) satisfies a given relationship with a predetermined variation threshold; and
    determine (340, 350, 360, 370, 380) a correct visibility condition in said measuring volume when said relationship is satisfied, and a poor visibility condition in said measuring volume when said relationship is not satisfied.

13. The system of Claim 12, wherein said processing means (11) are further configured to:

    measure a width of said peak (17); and
    determine a visibility state causing said poor visibility condition as a function of said peak width.

14. The system of claim 13, wherein said processing means (11) are further configured to:

determine a first value related to said width according to the following equation:

$$B=L(\mu+3\sigma) \; - \; L(\mu-3\sigma)$$

where B is a normalized width, $\mu$ and $\sigma$ are mean and standard deviation, respectively, of the peak in the histogram, and L(x) is an intensity level determined at a position x in the histogram.

**15.** The system of claim 14, wherein said processing means (11) are further configured to:

determine whether said first value related to said width satisfies a given relationship with a predetermined reference threshold.

**16.** The system of any preceding claim 10 to 15, further comprising:

a number of radiating sources (2) provided at different distances from said image acquisition apparatus (3).

**17.** The system of Claim 16, wherein said control means (10) are further configured to control said radiating sources (2) and said image acquisition apparatus (3) to:

turn off (110) each radiating source (2) and acquire (120) a first image of each radiating source (2) off; and
turn on (13C) each radiating source (2) and acquire (140) a second image of each radiating source (2) on.

**18.** The system of Claim 17, wherein said control means (10) are further configured to control said radiating sources (2) and said image acquisition apparatus (3) to:

turn off (110) all radiating sources (2) simultaneously; and
turn on (130) all radiating sources (2) simultaneously.

**Patentansprüche**

**1.** Sichtmessverfahren, aufweisend:

Bereitstellen mindestens einer Strahlungsquelle (2), die dazu konfiguriert ist, einen Richtstrahl auszustrahlen;
Bereitstellen einer Bildaufnahmevorrichtung (3) in einem vorgegebenen Abstand (Di) zu der Strahlungsquelle (2), die ausgerichtet ist, um auf Befehl ein Bild aufzunehmen, das die Strahlungsquelle (2) enthält;
Ausschalten (110) der Strahlungsquelle (2) und Aufnehmen (120) eines ersten Bilds der ausgeschalteten Strahlungsquelle (2) ;
Einschalten (130) der Strahlungsquelle (2) und Aufnehmen (140) eines zweiten Bildes der eingeschalteten Strahlungsquelle (2); und
Verarbeiten (150) des ersten Bildes und des zweiten Bildes, um die Sicht in dem Messvolumen zwischen der Strahlungsquelle (2) und der Bildaufnahmevorrichtung (3) zu ermitteln;

wobei das Verfahren **dadurch gekennzeichnet ist, dass** das Verarbeiten des ersten Bildes und des zweiten Bildes aufweist:

Ermitteln (150) eines dritten Bildes als Differenz zwischen dem ersten Bild und dem zweiten Bild;
Ermitteln (300) eines Histogramms (14) der Pixel in dem dritten Bild;
Ermitteln einer Verschiebung ($\Delta$L) eines Maximums (17) in dem Histogramm bezüglich einer Referenzposition (REF); und
Ermitteln einer Änderung der Sicht ($\Delta$V) in dem Messvolumen als Funktion der Verschiebung ($\Delta$L).

**2.** Verfahren nach Anspruch 1, wobei die Änderung der Sicht ($\Delta$V) gemäß der folgenden Gleichung ermittelt wird:

$$\Delta V = \alpha * \Delta \dot{L}$$

wobei $\alpha$ eine Transformationsfunktion zwischen einem Helligkeitsniveau-Bereich des Histogramms und einem Sichtbereich ist.

3. Verfahren nach Anspruch 1 oder 2, ferner aufweisend:

Ermitteln (330), ob die Änderung der Sicht ($\Delta V$) eine vorgegebene Beziehung mit einer vorbestimmten Änderungsschwelle erfüllt; und
Ermitteln (340, 350, 360, 370, 380) einer korrekten Sichtbedingung in dem Messvolumen, wenn die Beziehung erfüllt ist, und einer schlechten Sichtbedingung in dem Messvolumen, wenn die Beziehung nicht erfüllt ist.

4. Verfahren nach Anspruch 3, ferner aufweisend:

Messen (350) einer Breite des Maximums (17); und
Ermitteln eines Sichtzustandes, der die schlechte Sichtbedingung verursacht, als Funktion der Breite des Maximums.

5. Verfahren nach Anspruch 4, wobei das Messen der Breite des Maximums aufweist:

Ermitteln eines ersten Wertes, der mit der Breite gemäß der folgenden Gleichung in Beziehung steht:

$$B = L(\mu + 3\sigma) - L(\mu - 3\sigma)$$

wobei B eine normierte Breite ist, $\mu$ und $\sigma$ die mittlere Abweichung bzw. die Standardabweichung des Maximums in dem Histogramm sind und L(x) ein Intensitätsniveau ist, das an einer Position x in dem Histogramm ermittelt wird.

6. Verfahren nach Anspruch 5, wobei das Ermitteln des Sichtzustandes aufweist:

Ermitteln, ob der erste Wert, der mit der Breite in Beziehung steht, eine vorgegebene Beziehung mit einer vorbestimmten Referenzschwelle erfüllt.

7. Verfahren nach einem der vorangehenden Ansprüche, wobei das Bereitstellen mindestens einer Strahlungsquelle aufweist:

Bereitstellen einer Anzahl von Strahlungsquellen (2) in verschiedenen Abständen zu der Bildaufnahmevorrichtung (3).

8. Verfahren nach Anspruch 7, ferner aufweisend:

Ausschalten (110) jeder Strahlungsquelle (2) und Aufnehmen (120) eines ersten Bildes jeder ausgeschalteten Strahlungsquelle (2); und
Einschalten (130) jeder Strahlungsquelle (2) und Aufnehmen (140) eines zweiten Bildes jeder eingeschalteten Strahlungsquelle (2).

9. Verfahren nach Anspruch 8, wobei das Ausschalten jeder Strahlungsquelle aufweist:

Gleichzeitiges Ausschalten (110) aller Strahlungsquellen (2) ; und

wobei das Einschalten jeder Strahlungsquelle aufweist:

Gleichzeitiges Einschalten (130) aller Strahlungsquellen (2).

10. Sichtmesssystem (1) aufweisend:

mindestens eine Strahlungsquelle (2), die dazu konfiguriert ist, einen Richtstrahl auszustrahlen;

eine Bildaufnahmevorrichtung (3), die in einem vorgegebenen Abstand (Di) zu der Strahlungsquelle (2) bereitgestellt ist und ausgerichtet ist, um auf Befehl ein Bild aufzunehmen, das die Strahlungsquelle (2) enthält;

Steuermittel (10), die konfiguriert sind, um die Strahlungsquelle (2) und die Bildaufnahmevorrichtung (3) zu steuern, um die Strahlungsquelle (2) auszuschalten und ein erstes Bild der ausgeschalteten Strahlungsquelle (2) aufzunehmen und um die Strahlungsquelle (2) einzuschalten und ein zweites Bild der eingeschalteten Strahlungsquelle (2) aufzunehmen; und

Verarbeitungsmittel (11), die konfiguriert sind, um das erste Bild und das zweite Bild zu verarbeiten, um die Sicht in dem Messvolumen zwischen der Strahlungsquelle (2) und der Bildaufnahmevorrichtung (3) zu ermitteln;

wobei das Sichtmesssystem (1) **dadurch gekennzeichnet ist, dass** die Verarbeitungsmittel (11) dazu konfiguriert sind:

ein drittes Bild als Differenz zwischen dem ersten Bild und dem zweiten Bild zu ermitteln (150);

ein Histogramm (14) von Pixeln in dem dritten Bild zu ermitteln; und

eine Verschiebung ($\Delta$L) eines Maximums (17) in dem Histogramm bezüglich einer Referenzposition (REF) zu ermitteln; und

eine Änderung der Sicht ($\Delta$V) in dem Messvolumen als Funktion der Verschiebung ($\Delta$L) zu ermitteln.

**11.** System nach Anspruch 10, wobei die Änderung der Sicht ($\Delta$V) gemäß der folgenden Gleichung ermittelt wird:

$$\Delta V = \alpha * \Delta L$$

wobei $\alpha$ eine Transformationsfunktion zwischen einem Helligkeitsniveau-Bereich des Histogramms und einem Sichtbereich ist.

**12.** System nach Anspruch 10 oder 11, wobei die Verarbeitungsmittel (11) ferner dazu konfiguriert sind:

Zum Ermitteln (330), ob die Änderung der Sicht ($\Delta$V) eine vorgegebene Beziehung mit einer vorbestimmten Änderungsschwelle erfüllt; und

Zum Ermitteln (340, 350, 360, 370, 380) einer korrekten Sichtbedingung in dem Messvolumen, wenn die Beziehung erfüllt ist, und einer schlechten Sichtbedingung in dem Messvolumen, wenn die Beziehung nicht erfüllt ist.

**13.** System nach Anspruch 12, wobei die Verarbeitungsmittel (11) ferner dazu konfiguriert sind:

Zum Messen einer Breite des Maximums (17); und

Zum Ermitteln eines Sichtzustands, der die schlechte Sichtbedingung verursacht, als Funktion der Breite des Maximums.

**14.** Verfahren nach Anspruch 13, wobei die Verarbeitungsmittel (11) ferner dazu konfiguriert sind:

Zum Ermitteln eines ersten Werts, der mit der Breite gemäß der folgenden Gleichung in Beziehung steht:

$$B = L(\mu + 3\sigma) - L(\mu - 3\sigma)$$

wobei B eine normierte Breite ist, $\mu$ und $\sigma$ die mittlere Abweichung bzw. die Standardabweichung des Maximums in dem Histogramm sind, und L(x) ein Intensitätsniveau ist, das an einer Position x in dem Histogramm ermittelt wird.

**15.** System nach Anspruch 14, wobei die Verarbeitungsmittel (11) ferner dazu konfiguriert sind:

Zum Ermitteln, ob der erste Wert, der mit der Breite in Beziehung steht, eine vorgegebene Beziehung mit einer vorbestimmten Referenzschwelle erfüllt.

**16.** System nach einem der vorangehenden Ansprüche 10 bis 15, ferner aufweisend:

Bereitstellen einer Anzahl von Strahlungsquellen (2) in verschiedenen Abständen zu der Bildaufnahmevorrichtung (3).

**17.** System nach Anspruch 16, wobei die Steuermittel (10) ferner dazu konfiguriert sind, die Strahlungsquellen (2) und die Bildaufnahmevorrichtung (3) zu steuern, um:

jede Strahlungsquelle (2) auszuschalten (110) und ein erstes Bild jeder ausgeschalteten Strahlungsquelle (2) aufzunehmen (120); und
jede Strahlungsquelle (2) einzuschalten (130) und ein zweites Bild jeder eingeschalteten Strahlungsquelle (2) aufzunehmen (140).

**18.** System nach Anspruch 17, wobei die Steuermittel (10) ferner dazu konfiguriert sind, die Strahlungsquellen (2) und die Bildaufnahmevorrichtung (3) zu steuern, um:

alle Strahlungsquellen (2) gleichzeitig auszuschalten (110); und
alle Strahlungsquellen (2) gleichzeitig einzuschalten (130).

**Revendications**

**1.** Procédé de mesure de visibilité, comprenant les étapes consistant à :

fournir au moins une source d'émission (2) configurée pour émettre un faisceau d'émission ;
fournir un appareil d'acquisition d'image (3) à une distance donnée ($D_i$) de ladite source d'émission (2) et orienté pour acquérir, sur commande, une image contenant ladite source d'émission (2) ;
désactiver (110) de ladite source d'émission (2) et l'acquisition (120) d'une première image de ladite source d'émission (2) désactivée ;
activer (130) de ladite source d'émission (2) et l'acquisition (140) d'une seconde image de ladite source d'émission (2) activée; et
traiter (150) desdites première et seconde images pour déterminer la visibilité dans le volume de mesure entre ladite source d'émission (2) et ledit appareil d'acquisition d'image (3) ;
ledit procédé étant **caractérisé en ce que** le traitement desdites première et seconde images comprend les étapes consistant à :

déterminer (150) une troisième image sous forme d'une différence entre ladite première et ladite seconde images ;
déterminer (300) un histogramme (14) des pixels dans ladite troisième image ;
déterminer un décalage ($\Delta L$) d'un pic (17) dans ledit histogramme par rapport à une position de référence (REF) ; et
déterminer une variation de la visibilité ($\Delta V$) dans ledit volume de mesure en fonction dudit décalage ($\Delta L$).

**2.** Procédé selon la revendication 1, dans lequel ladite variation de visibilité ($\Delta V$) est déterminée selon l'équation suivante :

$$\Delta V = \alpha * \Delta L$$

où $\alpha$ est une fonction de transformation entre un domaine de niveau de brillance dudit histogramme et un domaine de visibilité.

**3.** Procédé selon la revendication 1 ou la revendication 2, comprenant également les étapes consistant à :

déterminer (330) si ladite variation de la visibilité ($\Delta V$) satisfait ou non une relation donnée avec un seuil de variation prédéterminé ; et

déterminer (340, 350, 360, 370, 380) une condition de visibilité correcte dans ledit volume de mesure quand ladite relation est satisfaite et une condition de mauvaise visibilité dans ledit volume de mesure quand ladite relation n'est pas satisfaite.

**4.** Procédé selon la revendication 3, comprenant également les étapes consistant à:

mesurer (350) une largeur dudit pic (17) ; et
déterminer un état de visibilité causant ladite condition de mauvaise visibilité en fonction de ladite largeur de pic.

**5.** Procédé selon la revendication 4, dans lequel la mesure de ladite largeur de pic comprend l'étape consistant à:

déterminer une première valeur liée à ladite largeur selon l'équation suivante :

$$B = L(\mu + 3\sigma) - L(\mu - 3\sigma)$$

où B est une largeur normalisée, $\mu$ et $\sigma$ sont des écarts moyen et type, respectivement, du pic dans l'histogramme et L(x) est un niveau d'intensité déterminé à une position x dans l'histogramme.

**6.** Procédé selon la revendication 5, dans lequel la détermination dudit état de visibilité comprend l'étape consistant à:

déterminer si ladite première valeur liée à ladite largeur satisfait ou non une relation donnée avec un seuil de référence prédéterminé.

**7.** Procédé selon l'une quelconque des revendications qui précèdent, dans lequel au moins une source d'émission est fournie, comprenant l'étape consistant à:

fournir plusieurs sources d'émission (2) à des distances différentes dudit appareil d'acquisition d'image (3).

**8.** Procédé selon la revendication 7, comprenant également les étapes consistant à :

désactiver (110) chaque source d'émission (2) et l'acquisition (120) d'une première image de chaque source d'émission (2) désactivée ; et
activer (130) chaque source d'émission (2) et l'acquisition (140) d'une seconde image de chaque source d'émission (2) activée.

**9.** Procédé selon la revendication 8, dans lequel la désactivation de chaque source d'émission comprend l'étape consistant à:

désactiver (110) simultanément toutes les sources d'émission (2) ; et

dans lequel l'activation de chaque source d'émission comprend l'étape consistant à:

activer (130) simultanément toutes les sources d'émission (2).

**10.** Système de mesure de la visibilité (1) comprenant :

au moins une source d'émission (2) configurée pour émettre un faisceau d'émission ;
un appareil d'acquisition d'image (3) placé à une distance donnée ($D_i$) de ladite source d'émission (2) et orienté pour acquérir, sur commande, une image contenant ladite source d'émission (2) ;
des moyens de contrôle (10) configurés pour contrôler ladite source d'émission (2) et ledit appareil d'acquisition d'image (3) pour désactiver ladite source d'émission (2) et pour acquérir une première image de ladite source d'émission (2) désactivée et pour activer ladite source d'émission (2) et pour acquérir une seconde image de ladite source d'émission (2) activée; et
des moyens de traitement (11) configurés pour traiter ladite première et ladite seconde images pour déterminer la visibilité dans le volume de mesure entre ladite source d'émission (2) et ledit appareil d'acquisition d'image (3) ;

ledit système de mesure de la visibilité (1) étant **caractérisé en ce que** lesdits moyens de traitement (11) sont configurés pour :

déterminer (150) une troisième image comme une différence entre ladite première et ladite seconde images ;
déterminer (300) un histogramme (14) de pixels dans ladite troisième image ; et
déterminer un décalage ($\Delta$L) d'un pic (17) dans ledit histogramme par rapport à une position de référence (REF) ; et
déterminer une variation de la visibilité ($\Delta$V) dans ledit volume de mesure en fonction dudit décalage ($\Delta$L).

**11.** Système selon la revendication 10, dans lequel ladite variation de la visibilité ($\Delta$V) est déterminée selon l'équation suivante :

$$\Delta V = \alpha * \Delta L$$

où $\alpha$ est une fonction de transformation entre un domaine de niveau de brillance dudit histogramme et un domaine de visibilité.

**12.** Système selon la revendication 10 ou la revendication 11, dans lequel lesdits moyens de traitement (11) sont également configurés pour :

déterminer (330) si ladite variation de la visibilité ($\Delta$V) satisfait ou non une relation donnée avec un seuil de variation prédéterminé ; et
déterminer (340, 350, 360, 370, 380) une condition de visibilité correcte dans ledit volume de mesure quand ladite relation est satisfaite et une condition de mauvaise visibilité dans ledit volume de mesure quand ladite relation n'est pas satisfaite.

**13.** Système selon la revendication 12, dans lequel lesdits moyens de traitement (11) sont en outre configurés pour :

mesurer une largeur dudit pic (17) ; et
déterminer un état de visibilité causant ladite condition de mauvaise visibilité en fonction de ladite largeur de pic.

**14.** Système selon la revendication 13, dans lequel lesdits moyens de traitement (11) sont en outre configurés pour :

déterminer une première valeur liée à ladite largeur selon l'équation suivante :

$$B = L(\mu + 3\sigma) - L(\mu - 3\sigma)$$

où B est une largeur normalisée, $\mu$ et $\sigma$ sont des écarts moyen et type, respectivement, du pic dans l'histogramme et L(x) est un niveau d'intensité déterminé à une position x dans l'histogramme.

**15.** Système selon la revendication 14, dans lequel lesdits moyens de traitement (11) sont en outre configurés pour :

déterminer si première valeur liée à ladite largeur satisfait ou non une relation donnée avec un seuil de référence prédéterminé.

**16.** Système selon l'une quelconque des revendications 10 à 15 précédentes, comprenant en outre :

plusieurs sources d'émission (2) fournies à des distances différentes dudit appareil d'acquisition d'image (3).

**17.** Système selon la revendication 16, dans lequel lesdits moyens de contrôle (10) sont en outre configurés pour contrôler lesdites sources d'émission (2) et ledit appareil d'acquisition d'image (3) pour :

désactiver (110) chaque source d'émission (2) et acquérir (120) une première image de chaque source d'émission (2) désactivée ; et

activer (130) chaque source d'émission (2) et acquérir (140) une seconde image de chaque source d'émission (2) activée.

18. Système selon la revendication 17, dans lequel lesdits moyens de contrôle (10) sont en outre configurés pour contrôler lesdites sources d'émission (2) et ledit appareil d'acquisition d'image (3) pour :

désactiver (110) simultanément toutes les sources d'émission (2) ; et
activer (130) simultanément toutes les sources d'émission (2).

Fig.1

EP 1 596 185 B1

( START )

| ANALYSE AND SEGMENT SUB-IMAGES | — 100 |

| TURN OFF EMITTING DEVICE | — 110 |

| ACQUIRE FIRST IMAGE OF EMITTING DEVICE | — 120 |

| TURN ON EMITTING DEVICE | — 130 |

| ACQUIRE SECOND IMAGE OF EMITTING DEVICE | — 140 |

| PROCESS FIRST AND SECOND IMAGE TO OBTAIN THIRD IMAGE | — 150 |

| ANALYSE THIRD IMAGE TO DETERMINE VISIBILITY | — 160 |

( END )

# Fig.2

PROCESS
HISTOGRAM ——— 300

DETERMINE SHIFT ΔL
OF MAXIMUM PEAK ——— 310
IN HISTOGRAM

CALCULATE VARIATION
IN VISIBILITY ΔV IN ——— 320
MEASURING VOLUME

VISIBILITY ΔV
MEETS CONDITION? ——— 330

YES — SUFFICIENT VISIBILITY ——— 340

NO — MEASURE PEAK WIDTH ——— 350

NORMALIZED WIDTH B
SATISFIES RELATIONSHIP ——— 360
WITH THRESHOLD?

YES — PARTICLE DEPOSITS ——— 370

NO — FOG ——— 380

Fig.3

Fig.4

Fig.5

Fig.6